# EUROPÄISCHE PATENTSCHRIFT

(11) **EP 1 663 615 B1**
(45) Veröffentlichungstag und Bekanntmachung des Hinweises auf die Patenterteilung: **26.03.2008**
(21) Anmeldenummer: 04764643.5
(22) Anmeldetag: 31.08.2004
(51) Int. Cl.: B29C 47/02, B29C 65/02, E04H 15/64

(54) **VERFAHREN ZUR HERSTELLUNG EINER MINDESTENS EINEN KEDER AUFWEISENDEN FOLIENBAHN SOWIE DEREN VERWENDUNG**
METHOD FOR PRODUCING A FILM WEB HAVING AT LEAST ONE WEATHERSTRIP, AND USE THEREOF
PROCEDE DE PRODUCTION D'UNE BANDE PELLICULAIRE COMPORTANT AU MOINS UN BOURRELET ET SON UTILISATION

(30) Priorität: 08.09.2003 DE 10341345
(43) Veröffentlichungstag der Anmeldung: 07.06.2006
(73) Patentinhaber: Henkel Kommanditgesellschaft auf Aktien, 40589 Düsseldorf (DE)
(72) Erfinder: WELTER, Werner, 59427 Unna (DE)
(86) Internationale Anmeldenummer: PCT/EP2004/009677
(87) Internationale Veröffentlichungsnummer: WO 2005/025834

(56) Entgegenhaltungen:
- EP-A- 0 612 911
- WO-A-01/34922
- DE-A- 10 102 737
- DE-A- 19 801 865
- DE-C- 4 220 627
- DE-C- 10 132 518
- US-A- 2 293 252
- US-A- 2 791 807
- US-A- 4 581 269
- KOETTE R: "FLEXIBLE EXTRUSION - EIN NEUES VERFAHREN DER TPE-VERARBEITUNG" GUMMI, FASERN, KUNSTSTOFFE. INTERNATIONALE FACHZEITSCHRIFT FUR DIE POLYMER-VERARBEITUNG, GENTNER VERLAG. STUTTGART, DE, Bd. 50, Nr. 9, 1. September 1997 (1997-09-01), Seiten 712-715, XP000698113 ISSN: 0176-1625

## Beschreibung

Die vorliegende Erfindung betrifft ein Verfahren zur Herstellung eines flexiblen Flächenelements, insbesondere einer Folienbahn, mit mindestens einem Keder, wobei der Keder mit der Folienbahn über das Kedermaterial unmittelbar verbunden ist, sei es am Rande der Folienbahn oder weiter innen.

Flexible, insbesondere fahnenartige Flächenelemente werden in vielen Bereichen des täglichen Lebens zu unterschiedlichsten Zwecken eingesetzt. Grundsätzlich können derartige flexible Flächenelemente beispielsweise eine dekorative Funktion, eine schützende Funktion oder eine dichtende Funktion aufweisen. Besonders häufig sind derartige Flächenelemente beispielsweise bei der Abdeckung von Fensterflächen in Bauwerken oder Fahrzeugen als Sonnenschutz, bei der temporären oder dauerhaften dekorativen Bespannung von Flächen, beispielsweise im Messebau oder bei der Bauwerksabdichtung anzutreffen.

Die Befestigung von solchen Flächenelementen an größeren Konstruktionen, insbesondere an Rahmenkonstruktionen ist daher in vielen technischen Bereichen ein häufig auftretendes Problem.

Bei der Anschlussabdichtung von Fenstern zu tragenden Baukörpern ist beispielsweise grundsätzlich zu unterscheiden nach vorgehängten Fassaden, bei denen auch die Fenster durch entsprechende Konstruktionen vor dem tragenden Baukörper angebracht sind (vorwiegend bei größeren Objekten, Bürobauten u. ä.), ein- bzw. zweischaligen Fassaden sowie Wärmedämm-Verbundsystemen und sogenannten Lochfenstern, bei denen die Fenster im Bereich der tragenden Konstruktion mehr oder weniger innerhalb der Öffnung montiert werden (vorwiegend Wohnungsbau, kleinere Gebäude der Industrie oder Kommunen).

Um bei vorgehängten Fassaden den Anschluss der Fenster zum Baukörper wasserdicht und luft- und winddicht zu erstellen, ist es Stand der Technik, diesen Bereich mit Folien abzudichten. Diese Folien bestehen in der Regel aus EPDM, PIB, EVA oder Butyl, TPO oder PVC, Polyethylen, Polyester, Polyurethan oder kaschierten Aluminiumfolien. Die Folien werden dabei üblicherweise am Fassadenelement und auf dem Baukörper verklebt oder mechanisch befestigt.

Eine Möglichkeit, luft- und winddicht abzudichten und anschließend zu überputzen, besteht im Einsatz von selbstklebenden Butylbändern, die auf der Oberfläche mit einem Vlies versehen sind. Derartige Butylbänder sind auf dem Baukörper selbstklebend und können in die Fensterkonstruktion entweder hineingeklebt oder mechanisch befestigt werden. Diese Technik weist aber den Nachteil auf, dass die Butylbänder in der Regel eine Dicke von mehr als 1 mm aufweisen und bei Verklebungen über Kopf bei Breiten über 150 mm in der Regel zusätzlich mechanisch befestigt bzw. mit Putzträgern überspannt werden müssen.

Beim Einsatz von wasserdampfbremsenden bzw. wasserdampfsperrenden Folien sind die nachfolgend geschilderten bauphysikalischen Aspekte von besonderer Bedeutung. Aufgrund der DIN 4108 sowie der geltenden Wärmeschutz-Verordnung und unter Berücksichtigung der zukünftig noch verschärften Anforderungen aufgrund von Energie-Einsparungsgesetzen ist es erforderlich, nicht nur die Anschlussfuge zwischen den Fenstern und tragendem Baukörper selbst abzudichten und zu überbrücken, sondern die Abdichtungsfolie entsprechend den bauphysikalischen Gegebenheiten großflächiger (beispielsweise 30 bis 300 mm vorzugsweise 50 bis 150 mm) auf die sogenannte wärmeübertragende Umfassungsfläche, also den tragenden Baukörper, zu ziehen.

Diese Anforderung hat die folgenden Gründe: Im Winter ist die absolute Luftfeuchtigkeit in der Regel raumseitig höher als außenseitig, d. h. raumseitig stellt sich ein höherer Wasserdampfdruck ein als außenseitig. Das Dampfdruckgefälle führt zu einem Wasserdampfstrom von innen nach außen. Jedes Material setzt dem Wasserdampfstrom einen gewissen Widerstand entgegen. Die Eigenschaft, mehr oder weniger Wasserdampf durchzulassen, wird durch die Wasserdampfdiffusions-Widerstandszahl (µ-Wert) beschrieben.

Bei nebeneinander liegenden Bauteilen mit unterschiedlichen µ- Werten ist der Baustoff mit dem niedrigsten µ-Wert für den Diffusionsstrom maßgeblich. Wird also nur der Anschluss zwischen Fenster und tragendem Bauwerk, gegebenenfalls auch noch 1 bis 2 cm auf dem tragenden Baukörper mit einem Dichtstoff oder einer Folie mit hohem Wasserdampfdiffusions-Widerstand abgedichtet, gleichzeitig aber ein poröser Außenwandstein verwendet, wie es heute in der Regel der Fall ist, umwandert der Diffusionsstrom diese Abdichtung und ist damit in der Lage, in den Anschlussbereich zwischen Baukörper und Fenster einzudringen. Dort kann der Wasserdampf zu Wasser kondensieren.

Es ist daher insbesondere im Baubereich wichtig, Rahmenkonstruktionen, insbesondere Fensterrahmen, auf einfache Weise mit abdichtenden Folien auszustatten.

Aus dem Stand der Technik sind hierzu verschiedene Lösungen bekannt, die jedoch nahezu alle auf eine Verklebung zwischen Rahmenelement und Folie zurückgreifen. Solche Verklebungen sind jedoch häufig nicht in ausreichender Weise belastbar bzw. werden beim Anbringen in der Praxis oft als umständlich empfunden. Darüber hinaus ist eine mit einem Klebeelement ausgerüstete Folienbahn bei dekorativen Anwendungen oder bei Anwendungen, bei denen es auf die mehrfache Verwendbarkeit der Folie oder Folienbahn ankommt, oft nicht einsetzbar.

Die WO 01/34922 beschreibt eine mehrlagige Folienbahn für den Baubereich. Ein direkt auf der Folienbahn aufgebrachter Keder wird in der Druckschrift nicht beschrieben. Die Folienbahn wird aufgeklebt.

Die DE 198 01 865 betrifft eine Dichtleiste für Fenster, die einen haftklebrigen Formstreifen aus z.B. Butylkautschuk bzw. Polybutylen und ein flach ausgebildetes Profil ohne Hohlraum aufweist, das durch Umklappen von dafür formal ausgebildeten Profilzonen die Form eines in einer dafür vorgesehenen Rastnut an einem Fensterrahmen rastbaren Profils erhält.

Die DE 101 02 737 betrifft eine ähnliche Dichtleiste für z.B. Fenster aus Holz. Die Dichtleiste weist ebenfalls ein Profil auf, das mit einem haftklebrigen Formstreifen verbunden ist. Die Dichtleiste wird angenagelt oder angeheftet.

Die EP 0 612 911 betrifft eine Dichtungsfolienbahn, die an ihrem Befestigungsrand mit einer Kederdichtung versehen ist. Die Art der Verbindung zwischen Dichtungsfolienbahn und Kederdichtung lässt sich der Druckschrift nicht entnehmen. Die Kederdichtung soll mit der Dichtungsfolienbahn einstückig sein.

In der DE 42 20 627 C1 wird ein Verfahren zur Herstellung von Dichtungsplanen aus einem elastomeren Band und zumindest einem elastomeren Profilstreifen beschrieben, wobei beides durch Erwärmen miteinander verschweißt wird, nachdem vorher ein durch Wärme aktivierbares Schweißband auf die Grundfläche oder den Randbereich des Bandes aufgelegt wurde. Dadurch unterscheidet sich dieses Verfahren von dem vorbekannten Verfahren, bei dem die Verbindung des Profilstreifens mit der Plane oder einem Band durch Vulkanisation durch Erhitzen unter Druck erfolgt (sogenanntes Hotbonding-Verfahren).

In der DE 101 32 518 C1 wird eine Laderaumabdeckung und/oder Trennvorrichtung für Kraftfahrzeuge mit einer mindestens teilweise aus thermoplastisch verformbaren Polymeren bestehenden Werkstoffbahn und einem Keder zur Befestigung in einer Kedernut beschrieben. Der Keder wird durch thermoplastische Umformung der Materialanhäufung der Werkstoffbahn gebildet. Der Keder ist massiv und daher für viele Anwendungen nicht genügend komprimierbar oder undicht.
In der DE 196 08 240 wird ein Verfahren zum Aufbringen von Applikationselementen auf einen Träger beschrieben, wobei die Applikation auf den Träger aufgelegt und unter Temperatur- und Druckeinwirkung mit dem Träger verbunden wird. Der erforderliche Anpressdruck wird kennzeichnungsgemäß mittels eines flexiblen Elementes aufgebracht.

In dem Artikel von Kötte R. "Flexible Extrusion - ein neues Verfahren der TPE-Verarbeitung", Gummi, Fasern, Kunststoffe. Internationale Fachzeitschrift für die Polymerverarbeitung, Gentnerverlag, Stuttgart (DE), Bd. 50, Nr. 9, 1. September 1997, S. 712 - 715, XP 000698113 ISSN 0176-1625 wird lediglich ein Verfahren beschrieben, bei dem Kunststoffprofile direkt auf feste Substrate, wie beispielsweise Scheiben von Automobilen, aufextrudiert werden.

Während die aus dem Stand der Technik bekannten, Profile aufweisenden Folienbahnen Vorteile hinsichtlich der Verbindung der Folienbahn mit einem Rahmenelements aufweisen, so weisen sie Nachteile hinsichtlich ihrer universellen Verwendbarkeit bzw. hinsichtlich ihrer Herstellung auf.

Werden Formstreifen eingesetzt, die selbst haftklebrig sind, so lässt sich zwar dass Profil in einfacher Weise auf dem Formstreifen aufgrund dessen Klebrigkeit befestigen. Die Einsatzmöglichkeiten einer solchen Konstruktion sind jedoch aufgrund der Klebrigkeit des Formstreifens begrenzt.

Darüber hinaus ist die Belastbarkeit derartiger Klebeverbindungen oft nicht ausreichend hoch. Dies gilt insbesondere dann, wenn das Profil bzw. die Kederdichtung beispielsweise einen Formstreifen tragen, der im Rahmen seiner Anwendung Zugbelastungen ausgesetzt wird. Derartige Zugbelastungen ergeben sich beispielsweise dann, wenn ein entsprechender Formstreifen zu dekorativen oder schützenden Zwecken eingesetzt wird, beispielsweise als abnehmbarer Sonnenschutz in einem Fahrzeug oder in einem Gebäude. Auch bei der Verwendung im Baubereich, insbesondere bei der Anwendung zur Abdichtung von Rahmenelementen können die bei der Montage auftretenden Kräfte zwischen Folienstreifen und Profil bzw. Keder so groß sein, dass eine Klebeverbindung unter einer solchen Beanspruchung keine ausreichende Festigkeit aufweist.

Darüber hinaus war die Herstellung solcher Folienbahnen, die einen Keder aufweisen bislang sehr aufwendig.

Es bestand daher ein Bedürfnis nach einer Folienbahn, die sich beispielsweise als schützendes oder dekoratives Element, beispielsweise als abnehmbarer Sonnenschutz in Gebäuden oder Fahrzeugen, oder insbesondere zur Abdichtung von Fenstereinbauten in Bauwerken mit vorgehängten Fassaden oder Lochfenstern eignet, die einen Keder aufweist, der möglichst fest mit der Folienbahn verbunden ist, zumindest jedoch so fest, dass der Keder eher aus der Nut gerissen wird als von der Folienbahn. Weiterhin bestand ein Bedürfnis nach einem möglichst einfachen Verfahren zur Herstellung einer solchen Folienbahn.

Der vorliegenden Erfindung lag daher die Aufgabe zugrunde, eine einen Keder aufweisende Folienbahn und ein Verfahren zu deren Herstellung zur Verfügung zu stellen, welche bzw. welches eines oder mehrere der obengenannten Bedürfnisse erfüllt.

Die der vorliegenden Erfindung zugrundeliegenden Aufgaben werden durch eine einen Keder aufweisende Folienbahn und ein Verfahren zu deren Herstellung gelöst, wie sie im Rahmen des nachfolgenden Textes näher beschrieben wird.

Gegenstand der Erfindung ist daher ein Verfahren zur Herstellung einer mindestens einen Keder aufweisenden Folienbahn, wobei der Keder mit der Folienbahn über das Kedermaterial unmittelbar verbunden ist, sei es am Rande der Folienbahn oder weiter innen, bei dem der Keder bei seiner Extrusion im noch weichen Zustand mit der Folienbahn unter Druck zusammengeführt wird.

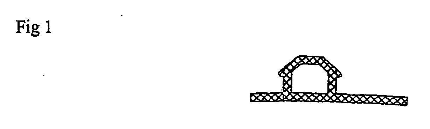

Unter einem "Keder" wird im Rahmen der vorliegenden Erfindung ein hinterschnittenes Profil verstanden, dass sich in entsprechende Aussparungen eines zur Aufnahme des Keders geeigneten Profils einklemmen lässt. Er weist zweckmäßigerweise einen Hohlaum auf, insbesondere einen Hohlraum mit einem mehr als 4-winkeligem Querschnitt, wobei die Winkel vorzugsweise abgerundet sind. Fig. 1 zeigt einen Querschnitt durch einen Keder mit einem 6-winkeligen Hohlraum im Maßstab von 2 : 1.

Eine erfindungsgemäß hergestellte Folienbahn weist einen Keder auf, wobei der Keder mit einem zur Aufnahme des Keders geeigneten Profil verbunden werden kann. An den Keder selbst werden dabei hinsichtlich dessen äußerer Form keine besonderen Anforderungen gestellt, der Keder muss lediglich mit einem zur Aufnahme des Keders geeigneten Profil eine ausreichend feste, vorzugsweise wind- und luftdichte Verbindung eingehen können. Die Verbindung kann dabei im Rahmen der vorliegenden Erfindung dauerhaft oder lösbar sein.

Unter einem "Rahmenelement" werden im Rahmen des vorliegenden Textes grundsätzlich alle Arten von Rahmen verstanden, die in eine Laibung in einem Bauwerk eingelassen und mit diesem verbunden werden. Beispiele für entsprechende Rahmenelemente sind insbesondere Türrahmen und Fensterrahmen. Unter der "Vorderseite des Rahmenelements" wird diejenige Seite des Rahmenelements verstanden, die vom Innenraum eines Gebäudes weg gerichtet und zur Außenseite eines Gebäudes hin gerichtet ist. Unter der "Rückseite des Rahmenelements" wird diejenige Seite des Rahmenelements verstanden, die zum Innenraum eines Gebäudes hin gerichtet und von der Außenseite eines Gebäudes weg gerichtet ist.
Unter einer "Folie" wird im Rahmen des vorliegenden Textes ein dünnes, flächiges, biegsames, flexibles und aufwickelbares Flächenmaterial aus organischen Materialien wie Papier, Kunststoff oder Metall verstanden, das im wesentlichen auf beliebige Weise, beispielsweise durch Extrusion, Walzen, Schlagen, Gießen, Kalandrieren oder Spritzen, erzeugt worden sein kann. Der Begriff "Folie" umfasst dabei im Rahmen des vorliegenden Textes auch solche Folien, die aufgrund ihrer Dicke oft auch als "Filme" bezeichnet werden. Der Begriff "Folienbahn" betrifft dabei erfindungsgemäß beispielsweise ein bahnförmiges Flächenelement, das sich in einzelne Folien unterteilen lässt.

Als Folien eignen sich grundsätzlich beliebige Bahnen aus natürlichen oder synthetischen Materialien, solange sie zweckmäßigerweise bei 20 °C nicht permanent klebrig sind. Geeignet sind beispielsweise kalandrierte, extrudierte, gestrichene oder geblasene Kunststoffbahnen, Warenbahnen auf Cellulosebasis, beispielsweise Papier, textile elastische oder nicht elastische Flächengebilde wie Vliesstoffe, Gewebe, Gewirke, Gelege, Geflechte, Gestricke, Tuftings, sowie jegliche Materialkombinationen aus zwei oder mehr der genannten Materialtypen, textile Flächengebilde aus Naturfasern wie Leinen, Sisal, Hanf, Baumwolle, Wolle, Seide und dergleichen, textile Flächengebilde aus synthetische Fasern wie Polyethylen, Polypropylen, Polyester, Polyamid, Polyacryl, Aramid und dergleichen, textile Flächengebilde aus Chemiespinnfasern wie Viskose oder Acetat und dergleichen, textile Flächengebilde aus Glasfasern oder Metallfasern sowie textile Flächengebilde aus Mischfasern bzw. Materialkombinationen aus zwei oder mehr der obengenannten Materialien.

Der Keder ist im Rahmen der vorliegenden Erfindung über das Kedermaterial mit der Folie bzw. der Folienbahn fest verbunden. Unter einer solchen Verbindung "unmittelbar über das Kedermaterial" wird im Rahmen der vorliegenden Erfindung eine Verbindung verstanden, die auf einer direkten Verbindung zwischen Folienmaterial und Keder beruht. Dabei werden keine mechanischen Verbindungselemente wie Nieten oder Schrauben oder Klebstoffe benötigt. Das Kedermaterial ist im Rahmen der vorliegenden Erfindung beispielsweise im Falle kompatibler Materialien (Folie/Keder) beispielsweise oberflächlich derart miteinander verschmolzen, dass eine ausreichende Haftung zwischen Kedermaterial und Folienmaterial entsteht. Bei Folienmaterialien mit rauer Oberfläche, insbesondere bei faserartigen Folienmaterialien wie Vliesen, Geweben, Gewirken, Gestricken und dergleichen, kann eine oberflächliche Verbindung zwischen Kedermaterial und Folienmaterial beispielsweise auch dadurch erfolgen, dass das erweichte oder geschmolzene Kedermaterial in die Faserstruktur eindringt, diese umschließt und nach Abkühlung aufgrund dieses Eindringens in die Faserstruktur zumindest eine mechanische Verbindung mit dem faserartigen Folienmaterial eingeht. Es ist dabei ebenso möglich, dass, beispielsweise im Falle vollständig kompatibler Fasermaterialien, sowohl eine Verbindung durch Schmelzprozesse als auch durch mechanisches Umschließen der Fasern erfolgt. Gleiches gilt auch für Mischfasern unterschiedlicher Kompatibilität mit dem Kedermaterial, die teilweise durch Schmelzprozesse, teilweise durch mechanisches Umschließen der Fasern mit dem Kedermaterial verbunden werden können.

Es ist erfindungsgemäß vorgesehen, dass eine entsprechend mit einem Keder ausgestattete Folienbahn im wesentlichen zu Folien mit beliebiger Größe zugeschnitten werden kann.

Die erfindungsgemäß hergestellten Folienbahnen sowie die daraus durch Zuschnitt hergestellten Folien mit Keder eignen sich zur Verwendung in der Bauwirtschaft, sei es im Bauhandwerk oder in der Bauindustrie, und zwar sowohl im Innen- als auch im Außenbereich, in der Möbelindustrie, in der Automobilindustrie, im Freizeitsektor und in der Landwirtschaft. Sie können z.B. als Sonnenschutz in Gebäuden oder Fahrzeugen, als Dekorationselemente, als kleine Rollos (Automobil-, Boot-, LKW-Beschattung und dergleichen), wobei das Rollo beispielsweise einfach zur Reinigung herausgenommen und wieder befestigt werden kann, als arretierbare LKW-Planen die ein aufwändiges Verschnüren der Planen überflüssig machen, als einfach zu befestigende anti-rutsch Unterlage, als einfach zu befestigende Unterlage für Matratzen oder Polsterauflagen für Gartenmöbel, als einfach zu befestigender Bestandteil von Zelten, beispielsweise von Vorzelten an Wohnwagen oder Reisemobilen, für alle temporär befestigten Folien, die von Zeit zu Zeit abgenommen werden müssen, beispielsweise zur Reinigung oder Wartung, als Autositzbezüge, als Bespannung von Bürotrennwänden, als abnehmbare Bodenbeläge oder dergleichen eingesetzt werden.

Wenn entsprechende Folien oder Folienbahnen für die Verwendung im Baubereich vorgesehen sind, so eignen sich grundsätzlich diffusionsoffene oder diffusionssperrende Folien zur Ausstattung mit einem Keder. Geeignet sind beispielsweise thermoplastische Kunststoffe, die als Folie die Eigenschaften haben, wasser- und luftdicht und bis zu einem bestimmten, steuerbaren Maß gegenüber Wasserdampf undurchlässig (diffusionssperrend) bzw. diffusionsoffen zu sein.

Die Wasserdampfdiffusion durch eine Folie wird mit dem sd-Wert charakterisiert, der von den eingesetzten Folienpolymeren abhängt. Für den diffusionssperrenden Bereich (sd-Wert > 15 m bis etwa 100 m) werden dabei bevorzugt Polyolefine, beispielsweise LDPE, EPDM, Butyl, TPO oder PVC eingesetzt, während für den diffusionsoffenen Bereich (sd-Wert 15 m oder weniger) besonders Polyamide, Polyester oder thermoplastische Polyurethane geeignet sind. Es ist auch möglich, Folien mit einem sd-Wert von 1000 m oder darüber einzusetzen. Entsprechende sd-Werte lassen sich beispielsweise durch Metallfolien oder durch Folienverbunde aus Metall- und Kunststofffolien erzielen. Der sd-Wert gibt dabei die Dicke einer Luftschicht an, die den gleichen Widerstand gegenüber Wasserdampfdiffusion wie der Werkstoff aufweist.

Wenn eine erfindungsgemäß mit einem Keder ausgestattete Folienbahn zur Abdichtung von Rahmenkonstruktionen, insbesondere von Fensterrahmen in Bauwerken eingesetzt werden soll, so kann die Ausgestaltung einer derartigen Folienbahn prinzipiell beliebig, wie bereits mehrfach aus dem Stand der Technik bekannt, vorgenommen werden.

Eine entsprechende Folienbahn weist beispielsweise, von einer in Längsrichtung der Bahn verlaufenden Achse aus gesehen, auf einer Seite der Achse einen diffusionsoffenen und auf der anderen Seite der Achse einen diffusionsbremsenden bzw. diffusionssperrenden Folienbereich auf. Es ist dabei im Rahmen der vorliegenden Erfindung möglich, dass die beiden unterschiedlichen Folientypen, welche die Folienbereiche mit diffusionssperrenden und diffusionsoffenen Eigenschaften ausbilden, entlang der in Längsrichtung der Bahn verlaufenden Achse aneinander stoßen oder sogar überlappen.

Es ist jedoch im Rahmen der vorliegenden Erfindung bevorzugt, wenn die beiden Folienbereiche entlang der Längsachse der erfindungsgemäßen Folienbahn nur eine geringe Distanz zueinander oder keine Distanz zueinander aufweisen oder sogar überlappen.

Eine erfindungsgemäß hergestellte Folienbahn kann im Querschnitt eine Folienlage oder zwei oder mehr Folienlagen, beispielsweise drei, vier oder fünf Folienlagen aufweisen. Die Zahl der Folienlagen kann dabei für den diffusionssperrenden Folienbereich und den diffusionsoffenen Folienbereich unterschiedlich sein.

In einer weiteren Ausführungsform kann auf den diffusionssperrenden Folienbereich beispielsweise zusätzlich eine Metallfolie, insbesondere eine Aluminiumfolie kaschiert sein. Dadurch wird eine Wasserdampfdiffusion durch das Produkt fast vollständig verhindert und der sd-Wert je nach Dicke der Aluminiumfolie auf deutlich mehr als 100 m, beispielsweise auf 1000 m oder mehr, erhöht. Es ist ebenfalls möglich, dass der diffusionssperrende Folienbereich eine zusätzliche Metallfolie, insbesondere eine Aluminiumfolie als Zwischenschicht zwischen zwei oder mehr Folienlagen, insbesondere jedoch zwischen zwei Folienlagen aufweist.

Das Flächengewicht der für die Folienbereiche mit unterschiedlichen Eigenschaften eingesetzten Folien kann dem Anforderungsprofil entsprechend von etwa 20 g/m² bis etwa 1000 g/m² betragen und liegt bevorzugt bei etwa 80 g/m² bis etwa 130 g/m².

In einer bevorzugten Ausführung wird als diffusionssperrender Folienbereich eine LDPE-Folie mit einem Flächengewicht von etwa 130 g/m² eingesetzt.

Die Folienbereiche mit unterschiedlichen Eigenschaften können im Rahmen der vorliegenden Erfindung, bezogen auf die Folienbreite, beispielsweise nur einen Teil der Fläche der Folie ausmachen, welche für die selbst tragenden Eigenschaften der Folie verantwortlich ist. So kann eine erfindungsgemäß hergestellte Folienbahn beispielsweise, ausgehend von der obengenannten Längsachse in Richtung Folienrand, zunächst eine Folienbahn mit diffusionsoffenen Eigenschaften und anschließend ein weiteres Material mit selbsttragenden Eigenschaften aufweisen, das sich beispielsweise bis zum Folienrand erstreckt. Vorzugsweise erstreckt sich jedoch, ausgehend von der Längsachse der Folienbahn, der jeweilige Folienbereich mit diffusionsoffenen bzw. diffusionssperrenden Eigenschaften bis zum Folienrand.

Die Längsachse, entlang derer die Folienbahn in Folienbereiche mit unterschiedlichen Eigenschaften eingeteilt ist, kann im wesentlichen in beliebigem Abstand von den Rändern der Folienbahn angeordnet sein. Es hat sich jedoch bewährt, wenn die Längsachse in einem Bereich der Folienbahn angeordnet ist, welcher sich in einem Abstand von etwa 30 % von der Mittelachse jeweils nach rechts oder nach links, bezogen auf die gesamte Breite der Folienbahn, angeordnet ist.

Im Rahmen einer bevorzugten Ausführungsform der vorliegenden Erfindung ist die Längsachse in einem Bereich der Folienbahn angeordnet, welcher sich in einem Abstand von weniger als 20 % von der Mittelachse, bezogen auf die gesamte Breite der Folienbahn, vorzugsweise weniger als 15 oder weniger als 10 %, befindet.

Der Begriff "Längsachse" bezieht sich dabei auf eine imaginäre gerade Linie entlang der Längsrichtung des Folienbands. Die Längsachse selbst, als räumlich-körperliche Ausgestaltung auf dem Folienband kann jedoch vom Ideal der geraden Linie abweichen und beispielsweise mäandernd, gezackt oder in sonstiger Weise von der geraden Linie abweichend gestaltet sein. Die räumlich-körperliche Ausgestaltung der Längsachse eines erfindungsgemäß hergestellten Folienbands liegt jedoch als im Wesentlichen gerade Linie, vorzugsweise im wesentlichen parallel zu den Rändern des Folienbands, vor.

Die erfindungsgemäß mit einem Keder ausgestatteten Folienbahnen weisen, sofern sie für einen Einsatz im Baubereich gedacht sind, beispielsweise auf der Vorderseite oder auf der Rückseite oder auf der Vorder- und der Rückseite einen Bereich mit einer Beschichtung auf, welche die Überputzbarkeit der Folie in diesem Bereich gewährleistet. Eine geeignete Beschichtung kann sich dabei beispielsweise über die gesamte Vorderseite oder die gesamte Rückseite oder über die gesamte Vorder- und Rückseite der erfindungsgemäßen Folienbahn erstrecken. Eine geeignete Beschichtung kann sich jedoch auch nur einen Randbereich der Folienbahn abdecken. Eine überputzbare Beschichtung kann sich dabei beispielsweise nur an einem Rand der Folienbahn befinden, beispielsweise an dem Rand der Folienbahn, welcher auf der Seite mit dem diffusionssperrenden Folienbereich liegt. Es ist jedoch ebenso möglich, und im Rahmen der vorliegenden Erfindung bevorzugt, wenn mindestens beide Randbereich der Folienbahn, also sowohl der Randbereich der auf der Seite mit dem diffusionssperrenden Folienbereich liegt als auch der Randbereich der auf der Seite mit dem diffusionsoffenen Folienbereich liegt, eine entsprechende Beschichtung aufweisen, wobei eine solche Beschichtung sowohl die Vorderseite als auch die Rückseite oder Vorder- und Rückseite betreffen kann.

Als überputzbare Beschichtung können im Rahmen der vorliegenden Erfindung Textilien wie Vliese, Gewebe, technische Gewirke und Gestricke aus synthetischen und natürlichen Fasern und Glas sowie verstärktes Papier und Folien eingesetzt werden, sofern sie einen haftenden Verbund zur Folie, beispielsweise mittels Klebstoff, eingehen können und den Produktanforderungen im Hinblick auf die Überputzbarkeit genügen. Die Flächengewichte der überputzbaren Beschichtungen können von etwa 20 g/m² bis etwa 1000 g/m², beispielsweise von etwa 80 g/m² bis etwa 100 g/m², betragen. In einer bevorzugten Ausführungsform der Erfindung werden als überputzbare Beschichtung Polyester-Nadelvliese mit einem Flächengewicht von etwa 80 g/m² eingesetzt.

Der Begriff "Randbereich" betrifft dabei im Rahmen des vorliegenden Textes einen Bereich der erfindungsgemäß hergestellten Folie, der sich vom Folienrand in Richtung Folienmitte erstreckt. Die überputzbare Beschichtung nimmt dabei vorzugsweise etwa 1 bis etwa 99,9 % der Fläche zwischen Folienrand und Längsachse, beispielsweise etwa 5 bis etwa 90 und oder etwa 10 bis etwa 80% der Fläche zwischen Folienrand und Längsachse des erfindungsgemäß hergestellten Folienbands ein.

Es ist dabei möglich, dass die von der überputzbaren Beschichtung bedeckte Fläche auf beiden Seiten der Längsachse im wesentlichen identisch ist. Es ist jedoch ebenso vorgesehen, dass die von der überputzbaren Beschichtung bedeckte Fläche auf beiden Seiten der Längsachse, also auf Folienbereichen mit unterschiedlichen Eigenschaften im Hinblick auf ihren Widerstand gegenüber der Diffusion von Wasserdampf durch die Folie, unterschiedlich sind. So ist es beispielsweise bei der Verwendung der erfindungsgemäß hergestellten Folienbahnen zur Abdichtung von Fenstereinbauten an Gebäuden mit vorgehängten Fassaden häufig sinnvoll, den sich in Richtung der vorgehängten Fassade erstreckenden Folienbereich im Hinblick auf seine Abmessungen und beispielsweise auch im Hinblick auf eine Beschichtung mit überputzbarem Material anders zu gestalten als den Folienbereich, der sich in Richtung des tragenden Mauerwerks und in Richtung des Gebäudeinneren erstreckt.

Um eine einfache Befestigungsmöglichkeit der erfindungsgemäßen Folienbahn beispielsweise an einem Fensterprofil zu schaffen, ist eine entsprechende Folienbahn beispielsweise entlang der die Folienbahn in einen diffusionsoffenen und einen diffusionssperrenden Bereich teilenden Längsachse auf der Vorderseite mit einem Keder versehen, der eine einfache Befestigung der Folie beispielsweise an einem Fensterprofil ermöglicht. Grundsätzlich eignen sich dabei alle Keder, die eine belastbare Verbindung zwischen Fensterprofil und Folie ermöglichen.

Die Rückseite einer solchen Folienbahn kann darüber hinaus weiterhin funktionell ausgestaltet sein, um die Anwendung der Folienbahn weiter zu vereinfachen.

So ist es beispielsweise möglich, die Rückseite der erfindungsgemäßen Folienbahn in einem Randbereich oder in beiden Randbereichen mit einer Klebeschicht zu versehen. Hierzu eignen sich grundsätzlich alle Klebstoffe, mit denen sich die Rückseite einer erfindungsgemäßen Folienbahn beschichten lässt und die dazu geeignet sind, die Folienbahn mit einem entsprechenden Untergrund zu verbinden. Geeignet sind beispielsweise Klebstoffe, die in einer Schichtdicke aufgetragen werden können welche bei mindestens etwa 0,01 mm, vorzugsweise jedoch darüber, beispielsweise bei mindestens etwa 0,2, 0,3, 0,4 oder mindestens etwa 1,0 mm oder darüber, beispielsweise bei mindestens etwa 2, 3, 4 oder 5 mm liegt.

Als weiteres funktionelles Element kann eine solche Folienbahn auf der Rückseite noch ein expandierbares Schaumstoffdichtband oder zwei oder mehr expandierbare Schaumstoffdichtbänder aufweisen. Besonders geeignet sind dabei Schaumstoffdichtbänder, die im komprimierten Zustand weniger als 50%, vorzugsweise weniger als 30% ihres Volumens im expandierten Zustand einnehmen.
Das expandierbare Schaumstoffdichtband oder die zwei oder mehr expandierenden Schaumstoffdichtbänder kann bzw. können grundsätzlich an einer beliebigen Stelle auf der Rückseite der Folienbahn angebracht sein, insbesondere jedoch an solchen Stellen, an denen eine Abdichtung zwischen Folienbahn und dem Baukörper erfolgen soll. Es kann dabei zweckmäßigerweise nur ein expandierendes Schaumstoffdichtband eingesetzt werden. Es ist jedoch ebenso möglich, dass zwei oder mehr expandierende Schaumstoffdichtbänder, beispielsweise zwei, drei, vier, fünf, sechs, sieben oder acht oder mehr expandierende Schaumstoffdichtbänder eingesetzt werden. In diesem Fall sollten die expandierenden Schaumstoffdichtbänder im wesentlichen parallel zueinander und vorzugsweise im wesentlichen parallel zur Längsachse der Folienbahn verlaufen.

Beispielsweise ist die Rückseite der erfindungsgemäß hergestellten Folienbahn an der Stelle oder den Stellen mit einem expandierbaren Schaumstoffdichtband versehen, die sich gegenüber einer Stelle befindet, an der die Vorderseite der Folienbahn mit einem Fensterprofil verbunden werden soll, vorzugsweise demnach also beispielsweise auf der Rückseite entlang der oben beschriebenen Längsachse des Folienbands oder zumindest parallel zu dieser Längsachse. Diese Anordnung weist den Vorteil auf, dass der Bereich zwischen Fensterprofil und Baukörper eine weitere Abdichtung und mechanische Stabilisierung erfährt.

Die Rückseite einer solchen Folienbahn ist beispielsweise an der Stelle oder den Stellen mit einem expandierbaren Schaumstoffdichtband versehen, die mit dem nach außen gerichteten Ende eines Fensterprofils abschließt bzw. abschließen. In diesem Fall ist es beispielsweise möglich, dass die Folie zusammen mit dem Schaumstoffdichtband an der nach Außen gerichteten Seite endet. So kann die Rückseite der Folienbahn beispielsweise an der Stelle mit einem expandierbaren Schaumstoffdichtband oder zwei oder mehr expandierenden Schaumstoffdichtbändern versehen sein, die mit dem nach Innen gerichteten Ende eines Fensterprofils abschließt. In diesem Fall ist es beispielsweise möglich, dass die Folie zusammen mit dem Schaumstoffdichtband oder den Schaumstoffdichtbändern an der nach Innen gerichteten Seite endet. Die Rückseite der Folienbahn kann beispielsweise an der Stelle mit einem expandierbaren Schaumstoffdichtband versehen sein, an der es sowohl mit dem nach Innen gerichteten als auch mit dem nach Außen gerichteten Ende eines Fensterprofils oder sonstigen Rahmenelements abschließt.

Geeignete expandierbare Schaumstoffdichtbänder sind bekannt. Grundsätzlich erfüllen alle derartigen Schaumstoffdichtbänder die gewünschte Funktion. In der Regel bestehen derartige Schaumstoffdichtbänder aus einem offenzelligen Schaumstoffmaterial, das bei Kompression und Entlastung wieder in seine ursprüngliche, vor der Kompression bestehende Form zurückkehrt. Derartige Schaumstoffmaterialien sind üblicherweise mit Verbindungen imprägniert, welche die Rückstellung nach einer Kompression stark verzögern und damit eine angemessene Verarbeitungszeit ermöglichen.

Besonders geeignet sind beispielsweise die unter dem Namen Sista von der Firma Henkel, TEROCOMP von der Firma Henkel Bautechnik oder die unter dem Namen blocoband ® oder SIP-bloco ® vertriebenen Produkte der Firma ISO-Chemie.

Geeignete Schaumstoffbänder können grundsätzlich eine Breite aufweisen die in einen Bereich von etwa 0,1 bis etwa 50% der gesamten Breite des erfindungsgemäßen Folienbands liegt. Es hat sich jedoch als vorteilhaft herausgestellt, wenn die Breite des expandierbaren Schaumstoffbandes in etwa der Breite des Verbindungselements entspricht, wobei um die Variationsbreite etwa 30% betragen kann.

Dabei hat es sich dabei herausgestellt, dass ein entsprechendes expandierbares Schaumstoffband in vielen Fällen dazu in der Lage ist, den üblicherweise nach dem Einpassen eines Rahmenelements in die Laibung erforderlichen Schritt des Ausschäumens des Zwischenraums zwischen Rahmenelement und Laibung zu ersetzen und damit das gesamte Verfahren des Einpassens eines Rahmenelements zu vereinfachen und sicherer zu gestalten.

Ein geeignetes Schaumstoffdichtband weist beispielsweise eine Breite von etwa 2 bis etwa 50 cm, beispielsweise etwa 2,5 bis etwa 40 cm oder etwa 3 bis etwa 30 cm, insbesondere etwa 2 bis etwa 10 cm oder etwa 4 bis etwa 8 cm, auf.

Ein geeignetes Schaumstoffdichtband kann auf der der Folie abgewandten Seite ebenfalls eine Klebeschicht aufweisen. Es ist jedoch ebenso möglich, dass das Schaumstoffdichtband auf der der Folie abgewandten Seite keine Klebeschicht aufweist.

Die im Zusammenhang mit einer im Baubereich einsetzbaren Folienbahn beschriebenen Klebeschichten weisen vorzugsweise auf ihrer der Folie abgewandten Seite eine Abdeckung auf. Geeignete Materialien für eine derartige Abdeckung sind dem Fachmann bekannt. Beispielsweise geeignet sind Trennpapiere bzw. Trennfolien, in der Regel mit einer Silikonbeschichtung.

Die funktionelle Ausstattung der Folienbereiche, insbesondere die Ausstattung mit überputzbaren Beschichtungen, kann vor oder nach dem Zusammenfügen der diffusionsoffenen und der diffusionssperrenden Folienteile erfolgen. So ist es beispielsweise möglich, zunächst die jeweiligen diffusionsoffenen und diffusionssperrenden Folienteile herzustellen, diese zu der erfindungsgemäßen Folienbahn zusammenzufügen und anschließend mit einer überputzbaren Beschichtung zu versehen. Es ist jedoch ebenso möglich und im Rahmen der vorliegenden Erfindung bevorzugt, dass zunächst die einzelnen bereits mit einer überputzbaren Beschichtung versehenen Folienteile hergestellt werden und diese anschließend zur Folienbahn zusammengefügt werden.

Diesem Herstellungsprinzip ist zu entnehmen, dass es sich bei einer "Folie" bzw. einer Folienbahn im erfindungsgemäßen Sinne nicht unbedingt um ein Gebilde mit einer im wesentlichen glatten Oberfläche handeln muss. Durch das hier beschriebene Herstellungsverfahren bedingt kann eine Folie bzw. eine Folienbahn im erfindungsgemäßen Sinne auch eine entsprechend raue Oberfläche aufweisen.

Aufgrund der geringen Dicke der verwendeten Materialien kann eine erfindungsgemäß hergestellte Folienbahn bei einer Anwendung im Baubereich schnell und korrekt auch in Ecken eingepasst werden. Die Summe der Eigenschaften der Folie in Zusammenhang mit der rationellen Verarbeitung gewährleistet unter baustellenüblichen Bedingungen sowohl die Wasserdichtigkeit als auch die Luft- und Winddichtigkeit, wobei die erfindungsgemäß hergestellte Folienbahn je nach Ausstattung und entsprechender Folienbreite zum Gebäudeinneren hin die Wasserdampfdiffusion bremst bzw. fast vollständig verhindert während sie auf der sogenannten kalten Seite wasserdampfdiffusionsoffen ist.

Es hat sich als vorteilhaft herausgestellt, dass die Dicke einer erfindungsgemäß hergestellten Folienbahn an ihrer dünnsten Stelle etwa 0,1 bis etwa 5 mm, insbesondere etwa 0,2 bis etwa 3 mm oder etwa 0,3 bis etwa 2 mm oder etwa 0,4 bis etwa 0,7 mm beträgt.

Insgesamt weist eine erfindungsgemäß hergestellte Folienbahn vorzugsweise mindestens eines oder mehrere der folgenden Merkmale aufweist:
- die Breite der Folienbahn beträgt 5 bis 80 cm
- die Dicke der Folienbahn beträgt an ihrer dünnsten Stelle 0,1 bis 1 mm, insbesondere 0,4 bis 0,7 mm.

Die erfindungsgemäß hergestellten Folienbahnen können gerollt oder beispielsweise gefaltet, insbesondere in zick-zack Form, dem Anwender zur Verfügung gestellt werden. Es ist jedoch ebenso möglich und im Rahmen der vorliegenden Erfindung vorgesehen, dass Fenster bzw. Fensterprofile bereits mit einer erfindungsgemäß hergestellten Folienbahn ausgerüstet werden.

Fensterrahmen können dabei bereits werksseitig mit der Folienbahn ausgerüstet werden, so dass sie auf der Baustelle nur eingesetzt und die Folienbahn angeklebt bzw. in sonstiger Weise mechanisch befestigt sowie verputzt werden muss.

Besonders vorteilhaft kann die erfindungsgemäße Folienbahn zum Abdichten der Anschlüsse von Fensterrahmen an tragende Baukörper bei Lochfenstern oder vorgehängten Fassaden sowie bei ein- oder mehrschichtigen Fassaden und mit Wärmedämm-Verbundsystemen zu beschichtenden Fassaden eingesetzt werden.

Eine erfindungsgemäß mit einem Keder versehene Folienbahn wird im Rahmen der vorliegenden Erfindung durch das hier vorgestellte Verfahren hergestellt.

Gegenstand der vorliegenden Erfindung ist ein Verfahren zur Herstellung einer mindestens einen Keder aufweisenden Folienbahn gemäß Anspruch 1.

"Extrusion" ist im weiten Sinne als "thetmoplastisches Umformen" zu verstehen. Dabei ist es vorteilhaft, einen Schneckenextruder als Umformmaschine zu verwenden.

Der anzuwendende Druck kann in weiten Bereichen variieren. Er hängt u.a. von der Viskosität des gerade extrudierten Keders und der Oberflächenstruktur der Folienbahn sowie von der Druckdauer ab. Es lässt sich kein allgemein anzuwendenden Bereich angeben. Der nötige Druck lässt sich im konkreten Fall leicht anhand der Schälfestigkeit des Verbundes Keder/Folienbahn bestimmen.

Zweckmäßigerweise wird die Folienbahn an der Stelle erwärmt, an der der Keder aufgetragen wird.

Vorzugsweise wird anschließend der gebildete Verbund abgekühlt.

Bis dahin ist es empfehlenswert, die Folienbahn und den Keder unter Spannung zu halten, um die Formstabilität sicherzustellen.

Es ist im Rahmen der vorliegenden Erfindung grundsätzlich erforderlich, dass der Keder aus einem gummiartigen, elastischen Kunststoffmaterial, vorzugsweise aus Naturkautschuk, einem thermoplastischen Polymeren, einem Elastomeren oder einem voll-, teil- oder unvernetzten thermoplastischen Elastomeren (TPE) besteht.

Grundsätzlich sind zur Herstellung des Keders daher alle thermoplastischen Polymeren und insbesondere alle thermoplastischen elastomeren Polymeren geeignet, die eine ausreichend stabile und haltbare Profilierung des Keders ermöglichen. Anstelle einer physikalischen Vernetzung ist auch eine chemische Vernetzung möglich, wenn sie sich an die Extrusion anschließt. Dann ist der Keder nicht mehr aufschmelzbar.

Im Rahmen einer bevorzugten Ausführungsform der vorliegenden Erfindung wird der Keder aus einem Material hergestellt, das eine möglichst stabile Verbindung mit dem Folienmaterial, das mit dem Keder verbunden werden soll, gewährleistet.

Die Verbindung soll also fest sein, insbesondere ausreichend fest für die jeweilige Anwendung. Generell wird die Verbindung als fest angesehen, wenn der Schälwert mindestens 2, insbesondere mindestens 5 N/cm beträgt. Je nach Anwendung kann der Schälwert aber auch mehr als 10, mehr als 20 oder gar mehr als 80 N/cm betragen. Die Messwerte werden dabei mit einer Zugprüfmschine (z.B. von Zwick) in einem Winkel von 180° mit den Prüfbedingungen in Anlehnung an § 4.3.3. der UEAtC-Richtlinien ermittelt.

Das erfindungsgemäße Verfahren läuft grundsätzlich in einem Schritt ab. Es hat sich beispielsweise als vorteilhaft herausgestellt, wenn die Verbindung zwischen Keder und Folie derart hergestellt wird, dass im Rahmen eines kontinuierlichen Verfahrens ein Folienband und ein Kederstrang derart zusammen geführt werden, dass der Kederstrang sich im erweichten Zustand befindet, und unter Druck mit dem Folienmaterial verpresst wird.
Dabei sollte der Kederstrang vorzugsweise derart weich sein, dass das Kedermaterial das Folienmaterial in ausreichender Weise benetzt bzw. sich mit diesem verbindet, um eine ausreichend feste Verbindung zwischen Keder- und Folienband zu ermöglichen. Hinsichtlich der Verbindung zwischen Kedermaterial und Folienmaterial gilt das bereits oben gesagte.

Im Rahmen einer weiteren Ausführungsform der vorliegenden Erfindung kann dem eigentlichen Verbindungsschritt zwischen Folie und Kederstrang ein Schritt vorausgeschickt werden, der gegebenenfalls die Kompatibilität zwischen Folienmaterial und Kedermaterial verbessert bzw. herstellt und damit für eine bessere Verbindung zwischen Kedermaterial und Folienmaterial sorgt.

Zur Präparation der Folienbahn wird sie an der Stelle mit einer dünnen Schicht des Kedermaterials beschichtet, an welcher später der Kederstrang aufgepresst werden soll. Es hat sich dabei bewährt, wenn in einem kontinuierlichen Verfahren das Folienband mit sich im noch weichen Zustand befindlichem Kedermaterial in Form eines dünnen Bandes beaufschlagt und Folienband und Kedermaterial verpresst werden. Vorzugsweise wird das Kedermaterial dabei in einem möglichst weitgehend weichen Zustand aufgetragen. Im Rahmen einer bevorzugten Ausführungsform der vorliegenden Erfindung weist das aufgetragene Kedermaterial beispielsweise eine niedrigere Viskosität auf als der in einem nachfolgenden Schritt aufgepresste Kederstrang.

Geeignete Viskositäten (MFR) liegen, je nach verwendetem Material, für Thermoplasten beispielsweise innerhalb eines Bereichs von etwa 10 bis etwa 20 g/min (150 °C, 2,16 kg), und bei thermoplastischen Elastomeren beispielsweise innerhalb eines Bereichs von etwa 3 bis etwa 10 g/min (190°C, 5 kg), gemessen nach DIN EN ISO 1133.

Eine Präparation der Folienbahn ist nicht zweckmäßig, wenn Kedermaterial und Folienmaterial kompatibel sind. Unter dem Begriff "Kompatibel" wird im Rahmen des vorliegenden Textes ein Zustand verstanden, bei dem sich die Materialien der Folie und des Keders vermischen lassen, d.h., einen zumindest weitgehend homogenen Blend bilden. Es ist dabei unschädlich, wenn ein solcher Blend inhomogene Domänen aufweist, solange die Vermischung zu einer im abgekühlten Zustand ausreichend belastbaren Verbindung zwischen Keder- und Folienmaterial führt.

Im Rahmen einer bevorzugten Ausführungsform der vorliegenden Erfindung ist daher das Material der Folienbahn mit dem Kedermaterial mischbar.

Im Rahmen einer weiteren bevorzugten Ausführungsform der vorliegenden Erfindung ist das Material der Folienbahn mit dem Kedermaterial jedoch nicht mischbar und weist mindestens anteilig faserförmige Bereiche auf. In einem solchen Fall hat es sich bewährt, das erfindungsgemäße Verfahren in mindestens zwei Stufen durchzuführen. Dabei wird in einer ersten Stufe das Folienmaterial innerhalb des faserförmigen Bereichs mit einem dünnen Streifen des Kedermaterials behandelt, so dass das Kedermaterial in erweichtem oder geschmolzenem Zustand das Folienmaterial innerhalb des faserförmigen Bereichs durchdringt und nach dem Erstarren das Fasermaterial umschließt und so für eine mechanische Befestigung des Keders sorgt. In vielen Fällen ist es jedoch auch bei weniger kompatiblen Materialien möglich, das Kederprofil direkt auf ein faserartig aufgebautes Material aufzubringen, ohne eine derartige Beschichtung vorzunehmen.

In einer bevorzugten Ausführungsform der Erfindung liegt das Material der Folienbahn zumindest teilweise faserförmig vor, insbesondere dann, wenn das Folienmaterial und das Kedermaterial nicht kompatibel sind.

Nachdem die Folienbahn innerhalb eines begrenzten Bereichs mit erweichtem Kedermaterial präpariert wurde, wird zur Verbindung ein noch weicher Kederstrang mit dem beschichteten Bereich unter Druck zusammengeführt. Durch die vorangehende Präparation (Imprägnierung und/oder Beschichtung) mit dem Kedermaterial wird eine optimale Kompatibilität zwischen Folienbahn und Kederstrang herbeigeführt.

Grundsätzlich ist es auch möglich, dass der Kederstrang sich nicht insgesamt im noch weichen Zustand befindet, sondern dass nur ein Teil des Kederstranges, beispielsweise der Kederfuß der mit der Folienbahn verbunden werden soll erweicht vorliegt, und der übrige Teil bereits abgekühlt ist.

Der Gegenstand der vorliegenden Erfindung wird nun anhand eines Herstellungsbeispiels erläutert.

### A) Versuche mit Terofol SD50

Das Folienband "Terofol SD50" der Firma Henkel Bautechnik mit einer Breite von 0,15 m und einer Dicke von 0,4 mm aus beidseitig mit PES-Vlies kaschierter Polyethylen-Folie wurde aufgrund seiner niedrigen Oberflächenenergie ausgewählt. Aufgrund dieser niedrigen Oberflächenenergie ist ein Verbinden eines derartigen Materials mit einem Keder beispielsweise durch Verklebung sehr schwierig. Als Kedermaterial wurde als thermoplastisches Elastomer eine Mischung von Polypropylen und Ethylen/Propylen/Butadien-Copolymer ausgewählt, welches die in den Tabellen 1 und 2 angegebenen Eigenschaften aufweist.

**Tabelle 1: Eigenschaften einer Folie aus dem Kedermaterial**

| Nr. | Testart | Anforderungen | Testresultate |
|---|---|---|---|
| 1. | Dehnungswiderstand | 4 Mpa | 5,0 MPa |
| 2. | Maximale Dehnung | Min. 250% | 507% |
| 3. | Veränderung des Dehnwiderstandes nach 10 Tagen bei einer Temperatur von 70°C | Max. 25% | - 0,4% von 4,98 MPa |
| 4. | Veränderung der maximalen Dehnung nach 10 Tagen bei einer Temperatur von 70°C | Max. 25% | -0,4% von 505% |

**Tabelle 2: Weitere Eigenschaften einer Folie aus dem Kedermaterial**

| Nr. | Testart | Anforderungen | Testresultate | Testmethode |
|---|---|---|---|---|
| 1. | Härte, IRHD | ± 5 IRHD des erklärten Wertes | 52 | PN-ISO 868:1998 |
| 2. | Veränderung der Härte nach 10 Tagen bei einer Temperatur von 70°C IRHD | ± 5 IRHD des erklärten Wertes | +1 | PN-ISO 868:1998 |
| 3. | Veränderung der Härte nach 7 Tagen bei einer Temperatur von -10°C | ± 5 IRHD des erklärten Werte | +3 | PN-ISO 868:1998 |
| 4. | Schrumpfbei Temperaturerhöhung (70°C, 2 h) | Max. 2% | 0,1% | BS 7412;1991 |
| 5. | Stauchwiderstand 50% bei einer Temperatur von 55°C | Min. 40% | 54% | BS 7412;1991 |
| 6. | Einfluss von Ozon (100 pphm, 40°C, 96 h, Dehnung 20%) | Bricht nicht | Bricht nicht | PN-85/C-05015 |
| 5. | Dichte | 1,0±0,03 g/cm³ | 0,98 g/cm³ | ISO 1183:1987 |

Ein wichtiger Schritt bei der erfindungsgemäßen Herstellung ist die Art, wie der Folien-Vlies-Verbund mit dem Elastomeren derart zusammen geführt wird, dass die Kraft, die zum Abreißen des Keders vom Folien-Vlies-Verbund größer ist als die Kraft, die dazu benötigt wird, den Keder von dem Fenster-Profil zu entfernen, mit dem er verbunden ist.

Das erfindungsgemäße Verfahren wurde mit folgenden Geräten durchgeführt:
- Einschraubenextruder mit einem Schraubendurchmesser von 0,032 m, L/D = 25 und einem Kompressionsverhältnis von 1:2,8. Der Extruder wies drei Heizzonen im Zylinder und zwei Heizzonen im Kopf auf.
- Einschraubenextruder mit einem Schraubendurchmesser von 0,032 m, L/D = 25 und einem Kompressionsverhältnis von 1:2,8. Der Extruder wies drei Heizzonen im Zylinder und zwei Heizzonen im Kopf auf.
- Ein Extrusionskopf mit austauschbaren Endplatten
- Ein Walzwerk, bestehend aus zwei Walzen mit einem Durchmesser von 0,11 m, die durch einen Antrieb mit der gleichen Geschwindigkeit bewegt wurden. Die Walzen wurden mit Wasser gekühlt, um eine Erwärmung der Walzen und damit ein Verkleben des verpressten Material mit der Walze zu verhindern.
- Einen Aufnahmeabschnitt, der das verpresste Produkt aus dem Walzwerk aufnehmen kann. Dieser Aufnahmeabschnitt ist mit dem Walzwerkantrieb derart verbunden, dass das Produkt während der gesamten Verarbeitungszeit unter Spannung steht. Der Aufnahmeabschnitt weist einen eingebauten Ventilator zur Vorkühlung des Produkts auf.
- Ein geeigneter Kühlkanal, der mit einer Luftkapazität von 0,111 m³/s arbeitet.
- Eine Zugmaschine, die das Produkt im Kühlkanal streckt.
- Einen Aufwickler für das fertige oder halbfertige Produkt.

Zur Präparation des Folienbandes wurde der Extruder mit dem thermoplastischen Elastomeren beschickt. Der Zylinder des Extruders wurde mit elektrischen Heizvorrichtungen etwa auf die folgenden Temperaturen, beginnend bei der Beschickung, aufgeheizt: 150, 170 und 190°C. Der Extruderkopf wurde auf Temperaturen von 200 und 210° erhitzt.

Der Extruderkopf wurde mit einer Formplatte ausgestattet, welche die Extrusion eines flachen Bandes mit einer Breite von 0,025 m und einer Dicke von 0,003 m erlaubt. Während der Extrusion wurde aufgrund der hohen Temperatur die Viskosität des Materials verringert und aufgrund der Formplatte im Extrusionskopf ein Band mit einer Breite von etwa 0,025 m und einer Dicke von etwa 0,003 m erzeugt. Der Extrusionskopf zeigte in beliebiger, vorzugsweise in vertikaler Richtung auf das Walzwerk.

Das Folienband wurde dem Walzwerk zugeführt. Die Walzen wurden dabei derart angeordnet, dass zwischen den Walzen ein Abstand von 0,0008 m besteht. Aufgrund der Dicke des Gewebes und des extrudierten Elastomerbandes (0,0004 und 0,003 m) wurde die Oberfläche des Folienbandes bzw. das Gewebe von dem niedrigviskosen Elastomermaterial durchtränkt.

Diese Präparation wurde mit einer Geschwindigkeit von etwa 0,067 m/s durchgeführt. Die Aufnahme des präparierten Folienbandes erfolgte über das oben beschriebene System von Rollen, verbunden mit einer Vorkühlung durch einen Ventilator. Das vorgekühlte Halbzeug wurde schließlich im Kühlkanal abgekühlt. Während des gesamten Kühlvorgangs wurde das Halbzeug zur Stabilisierung unter Spannung gehalten.

Das derart präparierte Folienband wurde anschließend in Rollen aufgewickelt und wies eine Breite von 0,15 m und eine Dicke von 0,0004 m auf. An der mit dem thermoplastischen Elastomeren beschichteten Stelle wies das Halbzeug eine Dicke von 0,0009 m auf. Die Beschichtung wies eine Breite von 0,0032 m auf.

Zur Verbindung der Folienbahn mit dem Keder wurde der Extruder mit dem gleichen thermoplastischen Elastomeren wie zur Präparation beschickt. Die Kopfplatte im Extruder wurde durch eine Platte ersetzt, welche die Extrusion eines geeigneten Kederstranges mit der Form gemäß Figur 1 erlaubte. Die Temperaturen im Extruder wurden wie folgt eingestellt: 150, 170 und 180°C im Zylinder, 190 und 200°C im Kopf. Die Temperaturen wurden im Vergleich zur Fertigung des Halbzeugs verringert, da die Viskosität des Materials nicht so niedrig sein soll wie die Viskosität bei der Herstellung des Halbzeugs. Der Extrusionskopf wurde wieder senkrecht nach unten in Richtung des Walzwerkes gerichtet. Das in der ersten Phase erhaltene Halbzeug wurde dem Walzwerk zugeführt. Die Walzen des Walzwerkes wurden so gewählt, dass eine der Walzen eine Aussparung aufwies, um die Form des extrudierten Keders nicht zu beschädigen, jedoch andererseits eine feste Verpressung zwischen Folienband und Kederfuß zu ermöglichen. Das Aufbringen des Keders auf dem Folienband ließ sich im vorliegenden Fall 15 cm nach der Düse mit einer Geschwindigkeit von etwa 0,034 m/s erreichen, und zwar mit einem solchen Liniendruck, dass Kedermaterial Als fertiges Produkt wurde eine dauerhaft verbundene Kombination eines Folienbandes mit einem Kederstrang erhalten. Das erhaltene Material erfüllte die Anforderungen, wie sie an Kederverbindungen beispielsweise im Bereich der Folienbänder zum Einsatz im Baubereich, gestellt werden.

### B) Versuche mit Terofol SD5

Ein nicht präpariertes Folienband aus EPDM (Terofol SD5) ergibt praktisch die gleichen Untersuchungsergebnisse oder noch bessere, wenn man es zur Bindung randseitig vorwärmt. Auch dann bleibt die Form des Keders erhalten.

### C) Untersuchungen:

### 1. Clip-out-Test

| | | | |
|---|---|---|---|
| a) Ziel: Die Haftung des Keders zur Dichtbahn muss mindestens so groß sein, dass bei einer Belastung der Keder eher von dem Fensterprofil gerissen wird als von der Dichtbahn. Es soll daher in einem Zugversuch geprüft werden, ob die Haftung des Keders zur Dichtbahn höher ist als die Kraft, die man benötigt, um den Keder aus dem Fensterprofil zu reißen. | | | |
| b) | Messapparatur: | Zugmessgerät der Fa. Instron | |
| c) | Messparameter: | Probenbreite: | 100 mm |
| | | Einspannlänge: | 100 mm |
| | | Messbereich: | bis 500N |
| | | Messgeschwindigkeit: | 100 mm/min |
| d) | Versuchsablauf: | Ein weit verbreitetes Fensterprofil der Fa. Schüco wird in die obere Klemme des Zugmessgerätes eingespannt. Auf einer Breite 100 mm drückt man den Keder (s. Figur 1) in die dafür vorgesehene Nut und spannt die freie Seite der Dichtbahn in die untere Klemme ein. Nun beginnt der Messvorgang, die Klemmen bewegen sich auseinander, bis der Keder aus dem Fensterprofil auslöst. Bei dieser Bewegung wird die Kraftaufnahme in N/10 cm gemessen. Fensterprofil auslöst. Bei dieser Bewegung wird die Kraftaufnahme in N/10 cm gemessen. | |
| e) | Bewertung: | Das Ziel ist erreicht, wenn der Keder aus dem Fensterprofil auslöst, bevor der Keder sich von der Dichtbahn löst. | |

### 2. Schälversuch:

| | | |
|---|---|---|
| a) | Ziel: Es soll geprüft werden, wie fest der Keder an der Dichtbahn haftet. Dazu werden Schälversuche durchgeführt, da dabei Unterschiede im Adhäsions- und Kohäsions-Verhalten mit großer Empfindlichkeit angezeigt werden. | |
| b) | und c): siehe oben | |
| d) | Versuchsablauf: | Der Keder und die Dichtbahn werden eingespannt und mit einem Winkel von 180 ° auseinandergezogen. Es wird der durchschnittliche Widerstand für das fortlaufende Abschälen in N bestimmt und auf die Breite der Verklebung von Keder und Dichtbahn bezogen. |

### 3. Formbeständigkeit

Der Rand der Dichtbahn mit Keder wird visuell auf Längungen oder Schrumpf geprüft:
+ = glatt, keine Wellen (Dichtbahn und Keder sind gleich lang)
- = unruhig oder gar Wellen (Dichtbahn und Keder sind ungleich lang)

### 4. Ergebnisse

| Untersuchungen | | Proben | |
|---|---|---|---|
| Art | Dimension | SD50 | SD5 |
| - Clip-out-Test | | | |
| a) "Reißkraft | [N/100 mm] | > 130 | > 130 |
| b) Trennung von | | Keder aus Nut | Keder aus Nut |
| - Schälwiderstand | [N/10 mm] | 10,1 | 18,1 |
| - Formbeständigkeit | | + | + |

## Patentansprüche

1. Verfahren zur Herstellung einer mindestens einen Keder aufweisenden Folienbahn, wobei der Keder mit der Folienbahn über das Kedermaterial unmittelbar verbunden ist, sei es am Rande der Folienbahn oder weiter innen, bei dem der Keder bei seiner Extrusion im noch weichen Zustand mit der Folienbahn unter Druck zusammengeführt wird.

2. Verfahren nach Anspruch 1, **dadurch gekennzeichnet, dass** die Folienbahn an der Stelle erwärmt wird, an der der Keder aufgetragen wird.

3. Verfahren nach Anspruch 1 oder 2, **dadurch gekennzeichnet, dass** der Keder mindestens einen Hohlraum aufweist mit einem mehr als 4-winkeligem Querschnitt, wobei die Winkel vorzugsweise abgerundet sind.

4. Verfahren nach Anspruch 1, 2 oder 3, **dadurch gekennzeichnet, dass** das Kedermaterial ein thermoplastisches Polymer, insbesondere ein thermoplastisches Elastomer enthält.

5. Verfahren nach mindestens einem der Ansprüche 1 bis 4, **dadurch gekennzeichnet, dass** das Material des Keders und das Material der Folienbahn mischbar sind.

6. Verfahren nach mindestens einem der Ansprüche 1 bis 5, **dadurch gekennzeichnet, dass** das Material der Folie zumindest teilweise faserförmig vorliegt.

7. Verwendung der nach einem der Ansprüche 1 bis 6 hergestellten Folienbahn mit Keder in der Bauwirtschaft, sei es im Bauhandwerk oder in der Bauindustrie, und zwar sowohl im Innen- als auch im Außenbereich, in der Möbelindustrie, in der Automobilindustrie, im Freizeitsektor und in der Landwirtschaft.

## Claims

1. Process for the production of a film web having at least one welt, where the welt has been directly bonded by way of the welt material to the film web, either at the margin of the film web or further inward, in which the welt is joined under pressure during its extrusion, while the material is still soft, to the film web.

2. Process according to Claim 1, **characterized in that** the film web is heated at the site at which the welt is applied.

3. Process according to Claim 1 or 2, **characterized in that** the welt has at least one cavity with a more than 4-gonal cross section, where the angles have preferably been rounded off.

4. Process according to Claim 1, 2 or 3, **characterized in that** the welt material comprises a thermoplastic polymer, in particular a thermoplastic elastomer.

5. Process according to at least one of Claims 1 to 4, **characterized in that** the material of the welt and the material of the film web are miscible.

6. Process according to at least one of Claims 1 to 5, **characterized in that** the material of the film at least to some extent takes the form of fibres.

7. Use of the film web produced according to any of Claims 1 to 6 with welt in the building trade, either in manual construction work or in the construction industry, and specifically either in the indoor sector or in the outdoor sector, in the furniture industry, in the automobile industry, in the leisure sector, and in agriculture.

## Revendications

1. Procédé pour la préparation d'une bande de film présentant au moins un bourrelet, le bourrelet étant assemblé directement via le matériau du bourrelet avec la bande de film, soit au bord de la bande soit plus vers l'intérieur, dans lequel le bourrelet est assemblé sous pression dans un état encore mou lors de son extrusion avec la bande de film.

2. Procédé selon la revendication 1, **caractérisé en ce que** la bande de film est chauffée en l'endroit où le bourrelet est appliqué.

3. Procédé selon la revendication 1 ou 2, **caractérisé en ce que** le bourrelet présente au moins un creux avec une section transversale présentant plus de 4 angles, les angles étant de préférence arrondis.

4. Procédé selon la revendication 1, 2 ou 3, **caractérisé en ce que** le matériau formant le bourrelet est un polymère thermoplastique, de préférence un élastomère thermoplastique.

5. Procédé selon au moins l'une des revendications 1 à 4, **caractérisé en ce que** le matériau du bourrelet et le matériau de la bande de film sont miscibles.

6. Procédé selon au moins l'une des revendications 1 à 5, **caractérisé en ce que** le matériau de la feuille se trouve au moins en partie sous forme de fibres.

7. Utilisation de la bande de film avec un bourrelet produite selon l'une quelconque des revendications 1 à 6, dans le monde de la construction, soit dans l'artisanat de la construction soit dans l'industrie de la construction, tant à l'intérieur qu'à l'extérieur, dans l'industrie du meuble, dans l'industrie automobile, dans le secteur des loisirs et dans l'agriculture.
